# EUROPEAN PATENT APPLICATION

(11) **EP 1 844 953 A1**
(43) Date of publication of application: **17.10.2007**
(21) Application number: 07386008.2
(22) Date of filing: 19.03.2007
(51) Int. Cl.: B60B 7/04, B60B 7/12

(54) **Car wheel cover**

(30) Priority: 14.04.2006 GR 20060100234
(71) Applicant: Karras, Ioannis, TK 57022 Thessaloniki (GR)
(72) Inventor: Karras, Ioannis, TK 57022 Thessaloniki (GR)

(57) **Abstract**

It is a wheel cover that is applied on the car wheel rims. This application is achieved with the collaboration of the three separate fittings. In particular, the main body of the wheel cover (1), one metallic ring (4) and one wire-foil (2). The construction materials are plastic or metal or mixture as well as any appropriate and proper material existing in the market.

## Description

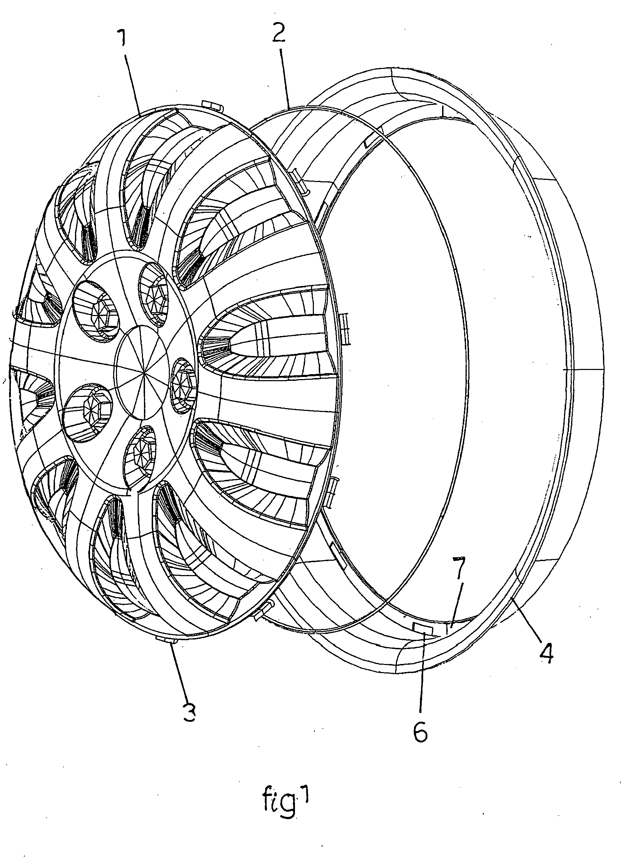

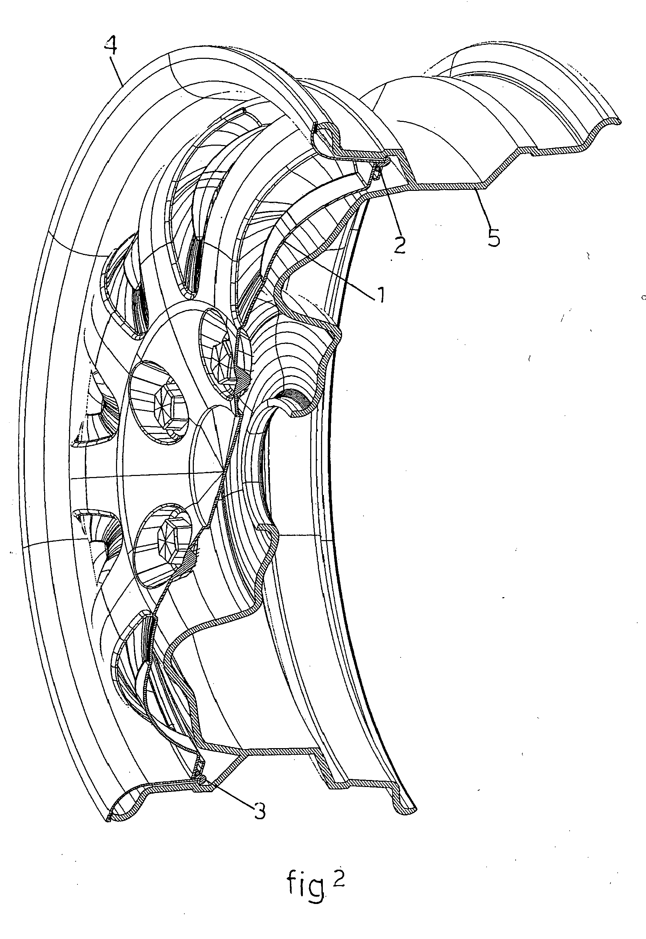

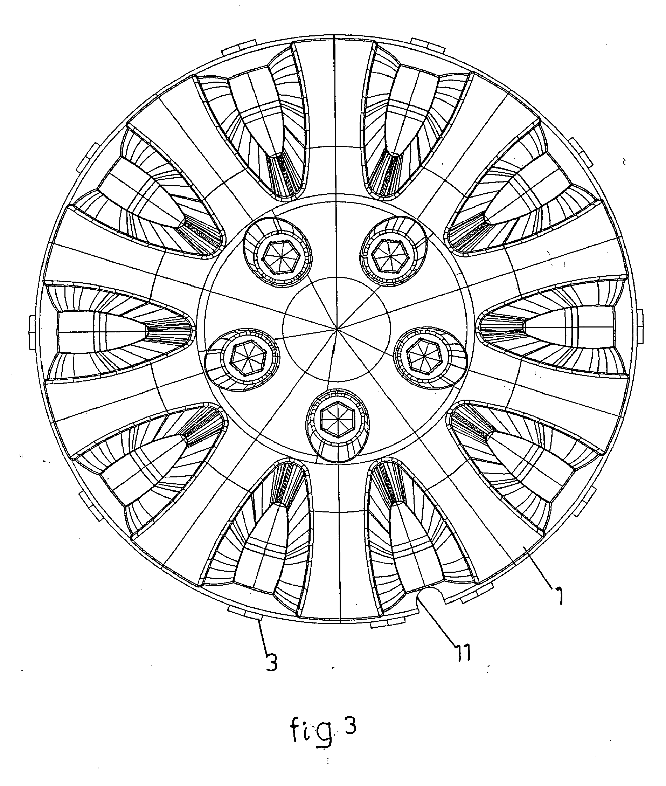

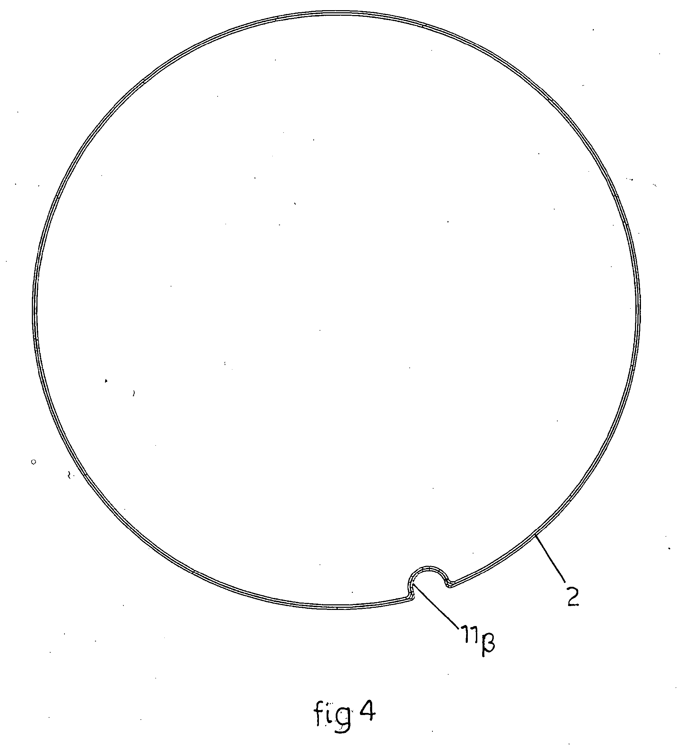

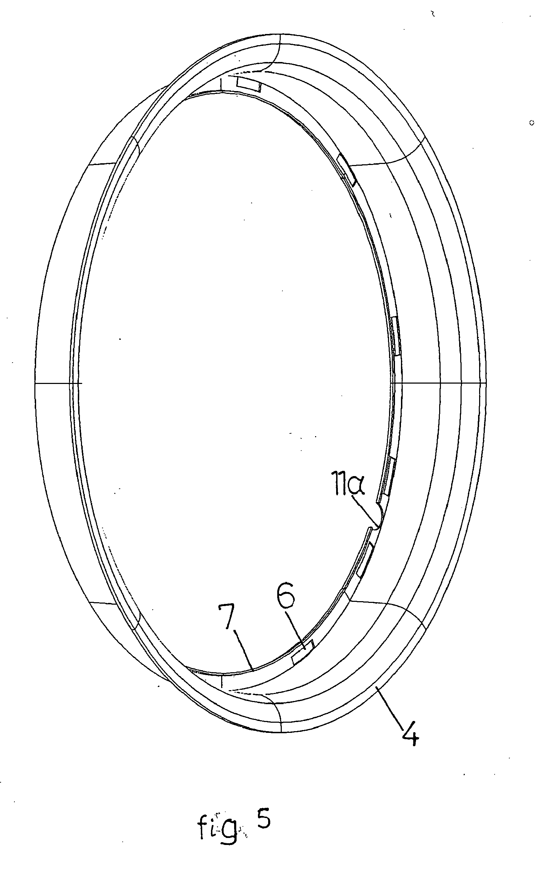

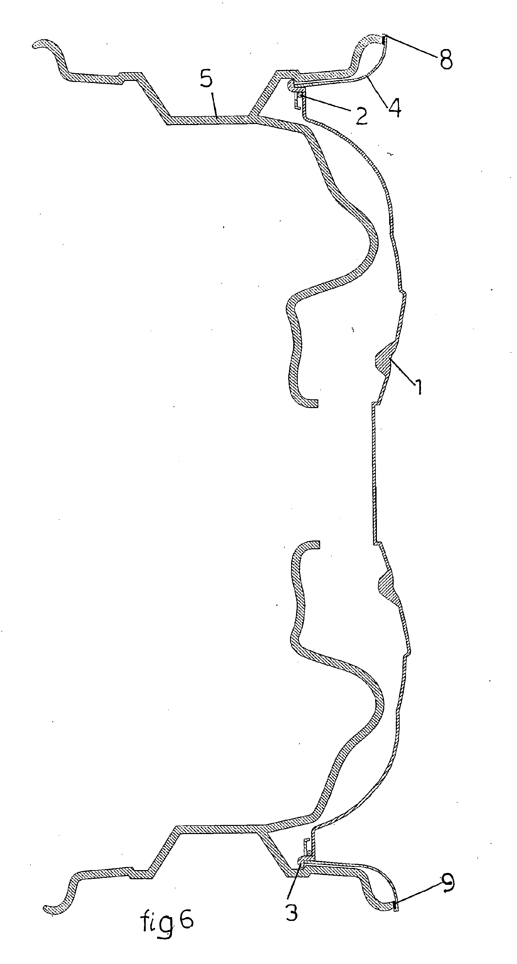

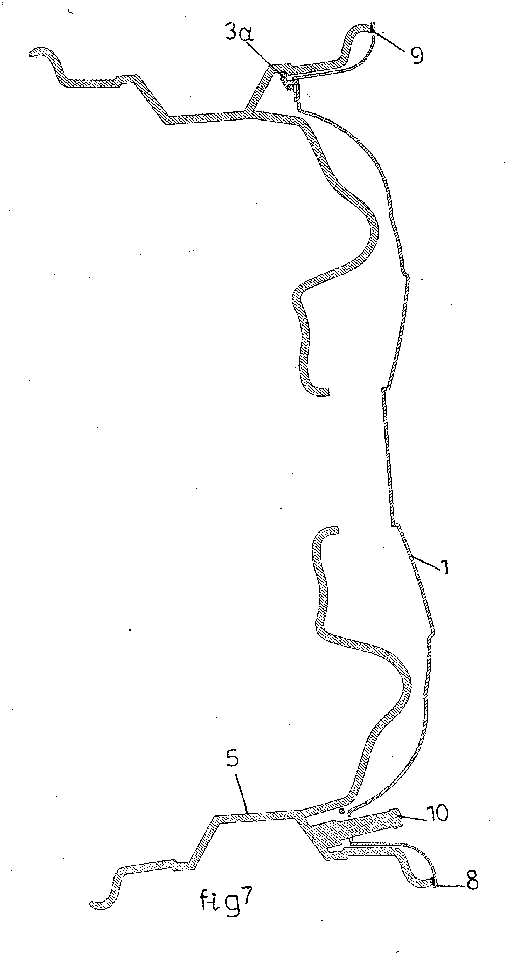

The invention consists in the construction of a car wheel cover which, in collaboration with a ring and the assistance of wire-foil, applies in the wheel rims of the cars. There are various wheel covers that apply on the wheels. However, my invention is special type which differs from the others regarding the following points. Contrary to the other wheel covers that present a common external flat surface, our wheel cover, thanks to its construction, attributes the appearance of cast aluminium rim. This is achieved due to the holding mechanism we use and is recommended for the construction of low height perimetral feet which, after being passed across respective holes on the ring, apply with the assistance of wire foil perimetrically on the negative socket of the rim, by managing to give stable holding of the wheel cover on the rim. In this invention, a car wheel cover consisting of three parts is revealed: First part is an external metallic stainless ring that may be constructed by any metal able to be further processed or plastic or mixture metal-plastic. In detail, the process depth and the parallelogram openings - holes (6) on the bottom of the ring, in combination with the underlay I've created on the finishing part (7), is necessary in order to pass the many extensions-feet (3) of the formed wheel cover (1) and give the opportunity to enter the steel formed wire-foil (2) which plays double role. On the one hand, it creates powerful mechanism (spring) for holding the wheel cover in the metallic rim and, on the other hand, it bonds the three parts in one. The steel wire that forms pressures in the extensions of the plastic part could be alternatively placed on the exterior of the metallic underlay existing on the metallic ring, adapted in support sockets that could be created in the internal part of the plastic extensions. On the upper part of the ring, I've formed external underlay (8) with cavity that fills with rubber (profile) (9) perimetrically and, as a result, the ring contact with the outer part of the metallic rim edge is realized with the intervention of the rubber by achieving thus shock absorption and adaptation, especially in the rims where, during balancing, were placed makeweights regardless of their placement point. One of the technical advantages, resulted by the combination of metal with plastic for the complex wheel cover is that the external diameter of the wheel cover remains uncharged at time duc to the fact that the metals have lower contraction and dilation in comparison to the purely plastic wheel covers which, due to weather conditions, many times are distorted by causing problems. We noticed that the way of holding the wheel cover in the metallic rim, creates apart from the powerful tightening, also practical facility due to stability of the metallic rim at the adaptation of the wheel cover in the rim. Secondly, the main body of the wheel cover (1) that gives us the chance for construction in any requested forms, depending on the fashion conditions of the market, is constructed by plastic material or other synthetic proper material and in various colorations. However, in the bottom part of the main body periphery (1), have multiple extensions-feet (3) necessary for the creation of tightening spring as aforementioned. In a point of the plastic finishing in the periphery, we leave opening (11) for the valve (10) and respectively the same opening (11a) for the ring (4) and opening (11b) for the wire-foil (2). The third part is the steel wire-foil (2), the placement of which results to the transmission of pressure of the flexible perimetral feet on the ring surface and all over the surface of the rim. In conclusion, we'd say that we present a wheel cover that consists of 3 assembled fittings that constitute an articulated interconnection between them. A practical application is given with reference to the attached plans. In figure 1, we note perspective plans of the three parts that constitute the assembly of the wheel cover. In figure 1, we note perspective plans of the three parts that constitute the assembly of the wheel cover. In figure 2, we note the perspective section of the adaptation of the wheel cover on the rim. In figure 3 we note the front side of the wheel cover. In figure 4, we note perspective of the ring. In figure 5 we note perspective of the rim. In figure 6, we note the section of the wheel cover placed on the rim. In figure 7, we note the section of the wheel cover placed on the rin different position of the wire-foil. Referring to the plans, the application of the main body of the wheel cover (I) is made with the assistance of the wire-foil (2) that applies perimetrically in the interior of the feet (3) and all together on the ring (4) that applies in the rim (5). The ring (4) on the upper part has underlay (8) with cavity that fills with rubber (profile) (9). The ring in the interior concludes in underlay (7) which bears peripherally and regularly openings - holes (6) in order to pass across the extensions-feet (3). In a point of the main body of the wheel cover (1) we leave un opening (11) for the passing of the valve (10) and respectively the same opening (11a) on the ring (4) and (11b) on the wire-foil(2). Alternatively, the wire foil (2) may be placed on the exterior part of the underlay (7) with proper modulation of the extensions-feet (3a).

## Claims

1. A car wheel cover consisting of the main body (1) that leads in the interior part in extensions-feet (3) with the assistance of whom it applies in a metallic ring (4) in collaboration with a wire-foil (2). Then, the whole assembly is applied on the rim (5) of the car wheels. The construction material may be plastic-metal or mixture and any other appropriate material.

2. A car wheel cover, like claim 1 and marked by the fact that the ring (4) on the upper part there is underlay (8) with cavity that fills with rubber (profile) (9). Furthermore, the ring in the interior concludes in the underlay (7) which bears peripherally regularly openings-holes (6) for the passing of extensions-feet (3). Lastly, on the ring (4) there is opening (11a) for the passing of the valve (10) and respective openings (11) and (11b) on the main body (1) and on the wire-foil (2).

3. A car wheel cover like in claims 1 and 2 marked by the fact that, alternatively, the wire-foil (2) may be placed externally of the underlay (7) with proper formation of the extensions - feet (3a).
